# EUROPEAN PATENT APPLICATION

(11) **EP 0 588 304 A1**
(43) Date of publication of application: **23.03.1994**
(21) Application number: 93114764.9
(22) Date of filing: 14.09.1993
(51) Int. Cl.: A61C 19/00

(54) **Heating assembly for dental materials**

(30) Priority: 15.09.1992 US 944966
(71) Applicant: MINNESOTA MINING AND MANUFACTURING COMPANY, St. Paul, Minnesota 55133-3427 (US)
(72) Inventor: Brunsell, Robert E., c/o Minnesota Mining and, St. Paul, Minnesota 55133-3427 (US); Williams, Todd R., c/o Minnesota Mining and, St. Paul, Minnesota 55133-3427 (US); Oxman, Joel D., c/o Minnesota Mining and, St. Paul, Minnesota 55133-3427 (US); Christoff, James D., c/o Minnesota Mining and, St. Paul, Minnesota 55133-3427 (US)
(74) Representative: VOSSIUS & PARTNER

(57) **Abstract**

A heating assembly (10) for dental materials includes a heater (14) having a housing (22) with a heat conductive wall (26), and a heat block (16) removably coupled to the wall. The heat block (16) includes one or more through passages (36) extending in a non-vertical direction with an opening (38, 40) at each end for receiving a syringe (18) containing a quantity of dental material. The heat block (16) is removable from the heater (14) to facilitate thermal or chemical sterilization.

## Description

This invention relates to a heating system for dental materials that are adapted to be heated before use.

Certain dental materials are intended to be heated in the dentist's office immediately before use. For example, an impressioning material such as one described in U.S. Patent No. 5,066,231, European Patent Application No. 90314283.4 and PCT Application No. PCT/US91/01245 becomes flowable and may be readily shaped once heated to a temperature above its melting point or glass transition temperature. Other dental materials, such as temporary or permanent crown and bridge materials, bite registration materials, denture reline materials and endodontic filling materials are also often heated before use. Some dental materials are commercially available in syringes for dispensing directly to an application site.

Dental impression trays have also been developed that are adapted to be heated to a certain temperature before use. Once heated, the tray can be shaped by hand to better conform to the oral cavity of the patient. Examples of heat-softenable impression trays are described in U.S. Patent Nos. 5,026,278 and 5,040,976 and PCT Application Nos. PCT/US91/01244 and PCT/US91/01270.

In the past, a number of methods have been employed to heat dental materials. In some instances, syringes have been warmed by holding the syringe over the flame of a Bunsen burner. As can be appreciated, such a method does not provide precise control of the temperature of dental material in the syringe and there is a risk that the material will be heated to a temperature exceeding that which can be withstood by the patient without injury.

An electrically heated syringe for dental materials is described in U.S. Patent No. 4,265,618, and includes an electric resistance element that warms thermoplastic material in a barrel of the syringe. However, the syringe is somewhat inconvenient since the electric element increases the bulk of the syringe and maneuverability of the syringe is limited because the heating element is connected to a source of electrical power.

Dental materials are sometimes heated in the dental office using a hot water source such as hot tap water or a water bath. The water bath, if available, is more satisfactory than water dispensed from a tap because the electric heater of the water bath is typically connected to an automatic thermostat that maintains the water in the bath at a selected temperature. However, the water bath is somewhat unsatisfactory in that such a device requires a source of water, necessitates replenishing of the water at certain intervals due to evaporation, may spill, and may become contaminated with bacterial or viral pathogens that cause infectious diseases. Also, it is difficult to sterilize a water bath using an autoclave because the electric heater is normally not separable from the bath.

An electric heater for warming dental filling material in an injector is described in U.S. Patent No. 3,466,752 and includes a heater stand having a vertical slot that removably receives the injector. The heater stand includes an electric resistance heater connected to a circuit for controlling the temperature. However, the heater stand illustrated in U.S. Patent No. 3,466,752 is not suitable for autoclave sterilization because electronic circuitry within the heater stand would likely be damaged during such sterilization.

In addition, there is a risk associated with the heating methods for dental materials mentioned above, because the user might accidentally heat materials that should not be heated above typical room temperatures.

The present invention concerns a heating assembly for dental material and comprises a heater including a housing and a heat conductive wall and a heating element thermally connected to the wall. A device is provided for controlling the temperature of the heating element. The assembly further includes a heat block made of a heat conductive material. The block is removably coupled to the wall and has an elongated passage. The passage has a first opening for receiving a barrel of a syringe and a second opening remote from the first opening. The passage extends in a non-vertical direction through the heat block.

The heating assembly is advantageous in that the heat block can be removed from the heater for easy cleaning. The non-vertical passage through the heat block to receive the syringe improves the likelihood that material unintentionally dripping from the end of the syringe does not land on the heat conductive wall of the heater and interfere with heat transfer. The hole in both ends of the passage facilitates cleaning when necessary.

The invention will be described in more detail in connection with the drawings, in which:
Fig. 1 is a side cross-sectional view of a heating and dispensing system for dental materials constructed in accordance with the invention;
Fig. 2 is a cross-sectional view taken along lines 2-2 of Fig. 1, except that a syringe and a dental impression tray of the system have been removed for illustrative purposes;
Fig. 3 is a side cross-sectional view of a heating and dispensing system for dental materials according to another embodiment of the invention; and
Fig. 4 is a fragmentary cross-sectional view of a portion of a system constructed in accordance with yet another embodiment of the invention.

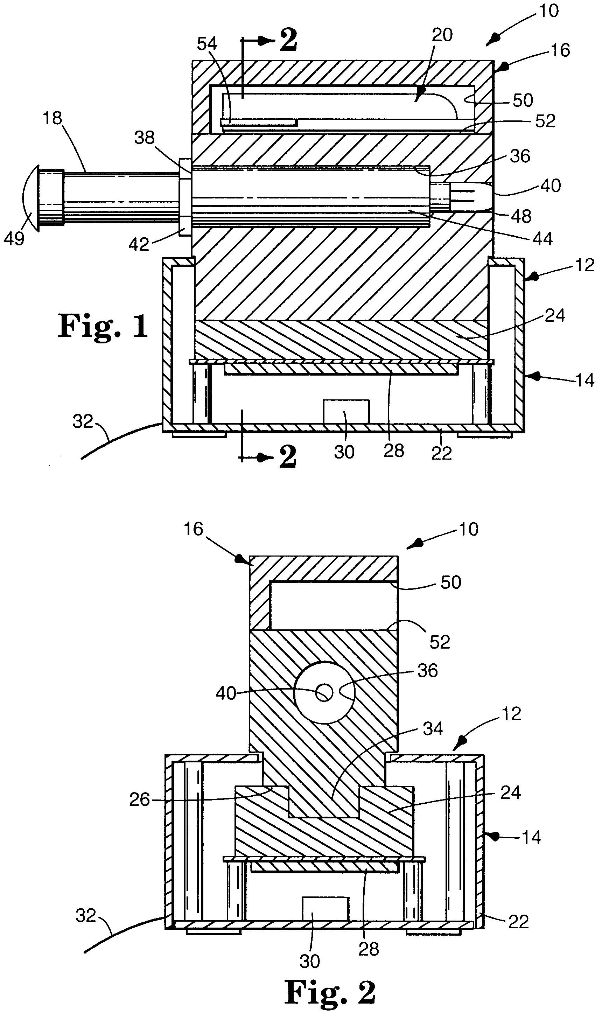

A system 10 for heating and dispensing dental material in accordance with the invention is shown in Figs. 1 - 2 and broadly includes a heating assembly 12 that comprises a heater 14 and a heat block 16. A syringe 18 and a dental impression tray 20 are removably received in the heat block 16 as shown in Fig. 1.

In more detail, the heating assembly 12 includes a hollow housing 22 having recessed below its upper surface an elongated heat transfer body 24 made of a thermally conductive metallic material such as aluminum. The body 24 has a U-shaped configuration in sections transverse to its longitudinal axis and has an upwardly facing supporting wall 26.

As illustrated in Fig. 2, a pair of elongated electrical resistance heating elements 28 extend along a spacer member that is affixed to the bottom of the body 24. An electronic control device 30 is located within the housing 22 and is operably connected to the heating elements 28 for controlling the temperature of the heating elements 28 as well as the body 24. The control device 30 is connected to a source of electrical power via a cord 32.

Although not shown in the drawings, the control device 30 includes an on-off switch, a light-emitting diode indicator lamp and a sensor for sensing the temperature of the body 24. When the on-off switch is turned on to activate the heating elements 28, the indicator lamp illuminates to show that electrical power is directed to the heating elements 28. Once the desired temperature is reached, the indicator lamp blinks, showing that the temperature of the body 24 has stabilized and electrical power is only intermittently directed to the heating elements 28. The control device 30 also includes a potentiometer for adjustment of the temperature when desired.

The heat block 16 is made of a heat conductive material such as aluminum, and has an elongated, depending flange 34 that is complemental in both length and cross-sectional configuration to the upwardly facing, U-shaped support wall 26 of the body 24. The heat block 16 includes a central portion located above the flange 34, and the central portion has a cylindrical passage 36 that extends in a horizontal direction.

The passage 36 includes a first circular opening 38 having a diameter equal to the diameter of the longitudinal extent of the cylindrical passage 36. A second opening 40 of the passage 36 is remote from the first opening 38 and is located on an opposite end wall of the end wall containing the first opening 38. As depicted in Fig. 1, the second opening 40 has a cylindrical configuration that is smaller in diameter than the diameter of the cylindrical passage 36.

The syringe 18 is received in the passage 36 through the first opening 38 in such a fashion that a transversely extending pair of handles 42 come to rest in contact with the end wall of the heat block 16 containing the first opening 38. A cylindrical barrel 44 of the syringe 18 is complemental in both length and diameter to the passage 36.

The barrel 44 is integrally connected to an aligned, reduced diameter forward nozzle that is normally covered by a removable cap 48. When the syringe 18 is received in the passage 36 as shown in Fig. 1, the cap 48 is located in the second opening 40 such that the forward end of the cap 48 is substantially flush with the end of the heat block 16 containing the second opening 40.

The syringe 18 also includes a plunger 49 having a ram movable within a cavity of the syringe barrel 44. The cavity contains a quantity of dental material that may be dispensed through the nozzle once the syringe 18 is removed from the heat block 16 and the cap 48 is separated from the nozzle 46.

An upper portion of the heat block 16 is secured by means such as machine screws to the middle portion of the heat block 16, and has an inverted recess that forms a rectangular cavity 50 with a flat horizontal shelf 52. The cavity 50 has an opening on one of the two vertical upright longitudinal sides of the heat block 16 to receive the dental impression tray 20 as illustrated in Fig. 1. The cavity 50 has a configuration such that a handle 54 of the tray 20 protrudes through the opening of the cavity and past the adjacent side of the heat block 16 when the tray 20 is fully seated in the cavity 50 in engagement with the opposite side of the heat block 16, so that grasping of the handle 54 is enhanced.

The impression tray 20 is made of a thermoplastic material that, when heated, is readily pliable for molding by hand to conform to the patient's dental arch. Preferably, the tray 20 is pre-loaded with a quantity of thermoplastic impression material. Both the tray 20 and the impression material therein have low viscosity in the warm state and good rigidity in the cool state to facilitate the making of impressions and models.

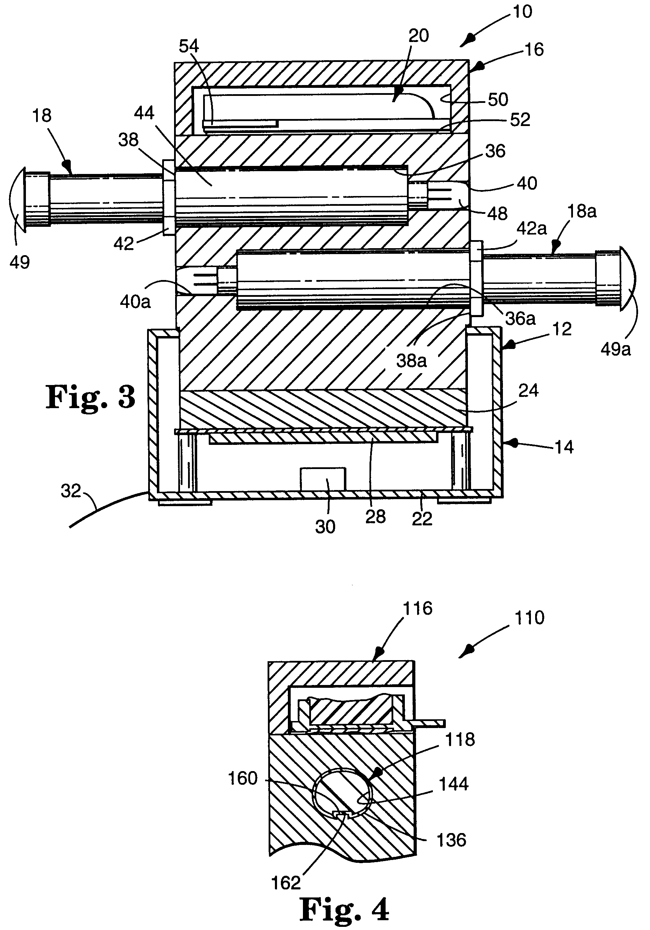

A preferred embodiment of the invention is shown in Fig. 3, wherein the reference numbers refer to elements that are substantially identical to the elements described above in connection with the embodiment shown in Figs. 1 and 2. However, the embodiment shown in Fig. 3 includes a second passage 36a that is parallel to and directly below the passage 36 for receiving a second syringe 18a.

The passage 36a is similar to the passage 36 in that the passage 36a is cylindrical, extends in a horizontal direction and has a first circular opening 38a with a diameter equal to the diameter of the longitudinal extent of the passage 36a. A second opening 40a of the passage 36a is remote from the first opening 38a and has a cylindrical configuration that is smaller in diameter than the diameter of the passage 36a. However, the first opening 38a of the passage 36a is located on a vertical end wall of the heat block 16 directly below the second opening 40 of the passage 36, while the second opening 40a of the passage 36a is located on an opposite end wall in a location directly beneath the first opening 38 of the passage 36.

The advantage of the oppositely oriented passages 36, 36a is that the handles 42 and the external handle of the plunger 49 of the syringe 18 is spaced apart from handles 42a and handle of plunger 49a of the syringe 18a. In this manner, the handles of the plungers 18, 18a do not interfere with each other during insertion or removal from the heat block 16 so that the height of the heat block 16 need not be unduly increased. The use of two syringe passages 36, 36a is preferred because a second syringe is available for immediate use in instances where the first syringe does not contain sufficient material.

An alternate embodiment of the invention is shown in Fig. 4, wherein a system 110 for heating and dispensing dental material includes a heat block 116 having an elongated passage 136 with an oval configuration in views transverse to the longitudinal axis of the passage 136. A syringe 118 is received in the passage 136 and has an elongated barrel 144 with an oval transverse cross-section that is complemental to the oval cross-sectional configuration of the passage 136.

The heat block 116 also includes an upstanding, elongated tab 160 that extends along the bottom of the passage 136. The tab 160 is complementally received in an elongated groove 162 formed in the bottom of the syringe barrel 144. In most other respects, the system 110 is identical to the system 10 described hereinabove.

The oval cross-sectional shape of the passage 136 and the upstanding tab 160 provide structure for Substantially preventing complemental, close fitting engagement of a conventional syringe barrel having a cylindrical shape with the heat block 116. For example, if an attempt were made to insert a syringe having a cylindrical barrel such as barrel 44 shown in Fig. 1 into the passage 136, the oval configuration of the passage 136 would, if sufficiently small, block entry of the syringe barrel. If the oval shape was somewhat larger, the barrel could be inserted but would fit only loosely within the passage 136, causing the user to realize that the syringe was not intended to be inserted in the heat block 116.

The tab 160 functions in a manner similar to the oval cross-section of the passage 136. By way of example, if a syringe having a barrel that was sufficiently small was inserted into the passage 136, the barrel would likely rest loosely on the tab 160 and rock when touched, serving to indicate to the user that use of the particular syringe with the heat block 116 was improper.

Both the matching oval configurations of the syringe barrel 144 and the passage 136, and the tab 160 with the groove 162, provide non-cylindrical configurations that match in complemental, key-like fashion, and yet provide good heat transfer between the heat block 116 and the syringe 118. The matching non-cylindrical configurations tend to ensure that only suitable syringes and materials in the syringes are subjected to heating.

Although not shown, alternate embodiments could include a heat block with a shelf but without a passage for a syringe, or a heat block with one or more syringe passages but lacking a shelf. The heat block could also have an aligned, side-by-side pair of cylindrical passages joined together to accommodate, for example, a double barrel cartridge such as that shown in U.S. No. 4,538,920, or a single barrel syringe having a diameter substantially equal to the diameter of one of the passages.

## Claims

1. A heating assembly (10, 110) for dental materials comprising a heater (14) including a housing (22) and a heat conductive wall (26), a heating element (28) thermally connected to said wall (26) and a device (30) for controlling the temperature of said heating element (28), characterized in that:
said heating assembly (10, 110) includes a heat block (10, 110) made of a heat conductive material, said block (16, 116) removably coupled to said wall (26) and having an elongated passage (36, 136), said passage (36, 136) having a first opening (38) for receiving a barrel of a syringe (18, 18a) and a second opening (40) remote from said first opening (38), said passage (36, 136) extending in a non-vertical direction through said heat block (16, 116).

2. The assembly (10, 110) of claim 1, characterized in that said heat block (16, 116) includes an upright side and a cavity (50) with an opening on said upright side.

3. The assembly (10, 110) of claim 2, characterized in that said cavity (50) includes a shelf (52) extending in a generally horizontal direction.

4. The assembly (10, 110) of any of claims 1 to 3, characterized in that said second opening (40) is smaller than said first opening (38) in order to complementally receive a syringe nozzle.

5. The assembly (10, 110) of any of claims 1 to 4, characterized in that said passage (36, 136) has a non-cylindrical configuration.

6. The assembly (10, 110) of claim 5, characterized in that said passage (36, 136) has an oval configuration in transverse cross-section.

7. The assembly (10, 110) of claim 5 or 6, characterized in that said passage (36, 136) includes a tab (160).

8. The assembly (10, 110) of any of claims 1 to 7, characterized in that said heat block (16, 116) includes structure (136, 160) for substantially preventing complemental engagement of said passage with a cylindrical syringe barrel.

9. The assembly (10, 110) of any of claims 1 to 8, characterized in that said second opening (40) is aligned with the longitudinal axis of said passage (36).

10. The assembly (10, 110) of any of claims 1 to 9, characterized in that said passage (36) extends in a horizontal direction through said heat block (16, 116).

11. The assembly (10, 110) of any of claims 1 to 10, characterized in that said heat block (16, 116) includes a second passage (36a) extending in a non-vertical direction through said heat block (16, 116).
